# EUROPÄISCHE PATENTANMELDUNG

(11) **EP 1 341 112 A2**
(43) Veröffentlichungstag der Anmeldung: **03.09.2003**
(21) Anmeldenummer: 03003936.6
(22) Anmeldetag: 21.02.2003
(51) Int. Cl.: G06F 17/60

(54) **Anzeigeverfahren zur Unterstützung der Ein- und Ausgabe von Daten in Tabellenkalkulationsprogrammen**

(30) Priorität: 22.02.2002 DE 10207534
(71) Anmelder: Tenovis GmbH & Co. KG, 60326 Frankfurt am Main (DE)
(72) Erfinder: Pfeil, Thomas, 65558 Holzheim (DE)
(74) Vertreter: Heinze, Ekkehard, Dipl.-Phys. Dr.

(57) **Zusammenfassung**

Die Erfindung betrifft ein Anzeigeverfahren zur Unterstützung der Eingabe und Ausgabe von Daten in Tabellenkalkulationsprogrammen, umfassend eine durch Umgebungsvariablen in Look & Feel definierte tabellarische Darstellung, mindestens einen durch einen Datenzeiger (7) aktivierbaren Softkey und eine durch Aktivierung des Softkey auf einem Display erzeugte Ein- und Ausgabeapplikation, insbesondere eine Dialogbox, für Eingabe und Ausgabe von Programmresultaten oder Textfelder zu einer freien Texteingabe wobei eine Darstellung der Ein- und Ausgabeapplikation gemäß den Umgebungsvariablen in die tabellarische Darstellung eingefügt wird.

## Beschreibung

Die Erfindung betrifft ein Anzeigeverfahren zur Unterstützung der Ein- und Ausgabe von Daten in Tabellenkalkulationsprogrammen nach dem Oberbegriff des Anspruchs 1.

In derartigen Programmen werden Daten in nach Zeilen und Spalten geordneten Zellen eingegeben, verwaltet und in Programmprozeduren verarbeitet. Mittels Eingabemasken, die sich in der bekannten Weise durch Anwählen eines Menüpunktes aus einer Menüleiste oder durch Aktivieren eines auf ein Ensemble von markierten Tabellenzellen bezogenen Kontextmenüs öffnen lassen, ist es möglich, Daten zu kopieren, einzufügen, innerhalb der Tabelle zu verschieben oder den eingegebenen Daten bestimmte Eigenschaften zuzuweisen, die Tabellenform als solche zu editieren und dergleichen weitere Bearbeitungen auszuführen.

Bei den derzeit bekannten Gestaltungen von Kontextmenüs, Eingabemasken, Pulldown-Menüs, Feldern zur freien Texteingabe und anderen Dialogboxen besteht in Tabellenkalkulationsprogrammen der Nachteil, dass die äußeren Begrenzungen dieser graphischen Eingabetools die Tabellendaten teilweise überdecken. Das ist besonders dann ärgerlich, wenn Daten beispielsweise in einer Tabellenspalte zu bearbeiten sind, wobei der Nutzer des Tabellenkalkulationsprogramms die Daten anderer Spalten im Blick haben muss. Da diese aber vom Kontextmenü oder der Eingabemaske in der Regel verdeckt sind, ist der Nutzer gezwungen, während seiner Arbeit diese ständig über das Tabellenareal zu verschieben, um sich die Daten anderer Zeilen und Spalten anzusehen.

Die Kontextmenüs, Eingabemasken und Dialogboxen tragen in der Regel in einer Kopfzeile eine Bezeichnung, die auf die Spalten und Zeilen verweisen, deren Daten bearbeitet werden sollen. Trotzdem geht für den Nutzer einer Tabellenkalkulation sehr schnell der Überblick verloren, welche Daten er im Moment in welcher Spalte oder Zeile bearbeitet, weil es sehr umständlich ist, sich Spalten- und/oder Zeilennamen zu merken. Das ist besonders dann lästig, wenn umfangreiche Bearbeitungen sehr großer Tabellen erfolgen müssen und die Daten in anderen Zeilen und Spalten ständig "im Auge zu behalten" sind.

Es ergibt sich die Aufgabe, ein Verfahren zur Anzeige von Kontextmenüs, Eingabemasken, Feldern zur freien Texteingabe und dergleichen weiteren Dialogboxen insbesondere in Tabellenkalkulationsprogrammen anzugeben, das die oben genannten Behinderungen und Nachteile beseitigt. Die Anzeige der Dialogboxen muss sich in einfacher Weise in den sonstigen Programmablauf einfügen und darf zu keinen Einbußen in der Leistungsfähigkeit und bei der Handhabung des Programms führen.

Die Aufgabe wird mit einem Verfahren nach Anspruch 1 gelöst, wobei die nachfolgenden Unteransprüche zweckmäßige Ausgestaltungen des Hauptanspruches beinhalten.

Tabellarische Darstellungen in Kalkulationsprogrammen sind in ihrem Look & Feel durch Umgebungsvariablen definiert, auf die ein für die graphische Darstellung der Daten zuständiger Bestandteil des Tabellenkalkulationsprogramms zugreift. Die Umgebungsdaten definieren insbesondere Höhe und Breite von einzelnen auf einem Display erzeugten Zellen und damit das Aussehen von Zeilen und Spalten der dargestellten Tabelle.

Zur Aktivierung von Dialogboxen werden üblicherweise Softkeys verwendet. Softkeys sind graphisch auf einem Display erscheinende Areale, auf die ein durch ein externes Eingabegerät, vorzugsweise eine Maus, ein Touchpad oder ein Trackball, gesteuerter und graphisch dargestellter Cursor bewegt werden kann, wobei durch eine Tasten- oder eine anderweitige Eingabe am externen Eingabegerät ein Programm ausgeführt wird, sofern sich der Cursor auf dem gegebenen Areal befindet. Ein einschlägiges Beispiel hierfür sind die bei graphischen Benutzeroberflächen üblichen Bestätigungs-Tasten oder Icons, bei denen mit dem bekannten "Doppelklick" an einer Maustaste die Ausführung eines Programms oder eines Programmschrittes ausgelöst wird.

Ein Textfeld zur freien Texteingabe ist ein Areal, auf das der Cursor in einer bereits dargestellten Weise bewegt werden kann und das eine Eingabe alphanumerischer Zeichen erlaubt. Im allgemeinen wird diese Eingabemöglichkeit dadurch am Cursor angezeigt, dass dieser von einer Pfeilform in eine senkrechte Strichform wechselt, die gegebenenfalls blinkend hervorgehoben ist.

Wildcards sind Stellvertreterzeichen, die insbesondere in Suchfunktionen verwendet werden und eine Eingabe unvollständig bekannter Suchdaten erlauben. Beispiele hierfür sind die einschlägig bekannten Stern- oder Fragezeichen-Symbole, die entweder einen beliebig großen Teil einer gesuchten Zeichenkette oder ein einzelnes Zeichen aus dieser Zeichenkette in Suchroutinen ersetzen.

Dialogboxen sind durch eine Programmprozedur erzeugte Areale, die eine Eingabe oder Ausgabe von Daten und/oder eine Auswahl aus vorgegebenen Optionen erlauben oder Informationen des Programms, wie Hinweise, Warnungen, Fehlermeldungen und dergleichen weitere Angaben auf einem Display anzeigen. Beispiele hierfür sind Auswahlmenüs jeglicher Art, beispielsweise Pulldown- oder Kontextmenüs, Ein- oder Ausgabemasken, sowie Warnungen oder Hinweise auf ein fehlerhaftes oder unvollständiges Datenformat, einen Programmabbruch oder eine fehlerhafte Ausführung einer Programmprozedur, wie beispielsweise eine fehlerhafte Druckfunktion oder dergleichen.

Softkeys, Textfelder zur freien Texteingabe, Wildcards und Dialogboxen bilden eine Gesamtheit von Interaktionsmöglichkeiten mit einem Programm, welche hier unter dem Begriff der Ein- und Ausgabeapplikation zusammengefasst sind.

Das erfindungsgemäße Verfahren beruht zum einen darauf, Einund Ausgabeapplikationen in die Tabelle des Kalkulationsprogramms zu integrieren, wobei für deren graphische Anzeige auf die Umgebungsvariablen der tabellarischen Darstellung zurückgegriffen wird. Weiterhin wird durch eine Aktivierung eines in dieser Weise angezeigten Softkeys eine Dialogbox erzeugt, die ebenfalls unter Zugriff auf die Umgebungsvariablen graphisch auf dem Display angezeigt wird. Der Zugriff erfolgt bei der Darstellung der Dialogbox in der Weise, dass sich deren Begrenzungen in die vorhandene Tabellengestaltung, insbesondere die Tabellenbegrenzungen, einfügen.

Die Ein- und Ausgabeapplikationen überdecken somit nicht mehr frei Zeilen und Spalten einer Tabelle, sondern passen sich der Form der Tabelle, insbesondere der Zellenform und damit der Zeilen-/Spalten-Konfiguration an. Dies erlaubt unter anderem eine einfache Zuordnung von innerhalb beispielsweise einer Dialogbox erfolgenden Dateneingaben zu einer bestimmten Zeile oder Spalte, indem nur dieser von der Dateneingabe betroffene Tabellenteil verdeckt wird und somit für einen Nutzer ein einfach visuell feststellbarer Zusammenhang zwischen Dialogbox und betroffenem Tabellenbereich hergestellt wird. Textfelder zur freien Texteingabe, insbesondere für eine Eingabe in Tabellenzellen oder eine Eingabe eines Kommentartextes, sind hierbei so begrenzt, dass diese eine ganzzahlige Gesamtheit definierter Zellen überdeckt.

Für die Darstellung eines Softkeys wird insbesondere die zellulare Struktur der tabellarischen Darstellung genutzt. Dies geschieht in der Weise, dass aus den Umgebungsvariablen Angaben über eine aktuell bestehende Zellenstruktur, die insbesondere Höhe und Breite der dargestellten Zelle umfassen, extrahiert und als Begrenzungsdaten innerhalb der Darstellungsvariablen für den Softkey verwendet werden. Im Ergebnis dieses Prozesses wird der Softkey integriert in einer Tabellenzelle erzeugt. Die Extraktion erfolgt fortlaufend mit den Änderungen der Umgebungsdaten, so dass die Darstellung des Softkeys der Tabellenformatierung fortlaufend angepasst ist.

Die Position eines so ausgestalteten Softkeys innerhalb einer Tabelle ist prinzipiell beliebig, und es können beliebig viele Softkeys in der Tabelle integriert sein. Aus Gründen einer besseren Übersichtlichkeit kann eine Gesamtheit von Softkeys innerhalb der Tabelle so gruppiert sein, dass diese entlang einer Spalte und/oder einer Zeile angeordnet sind. Als Ergebnis einer derartigen Ordnung wird eine Suchspalte oder Suchzeile gebildet. Dies ist vor allem dann vorteilhaft, wenn die durch Aktivierung eines Softkeys zu startende Prozedur auf spalten- oder zeilenartig gelistete Daten zugreift und/oder durch den Nutzer des Kalkulationsprogramms verschiedene Prozeduren zu aktivieren sind, deren Reihenfolge der Abarbeitung durch die Zeilen oder Spaltenstruktur der Tabelle vorgegeben ist. Diese Suchzeile oder Suchspalte kann optional eingeblendet oder ausgeblendet werden, was den Bedienkomfort und die Übersichtlichkeit beträchtlich erhöht.

Bei einer Aktivierung einer Dialogbox durch Zugriff auf einen Softkey oder einen internen Programmablauf wird eine Prozedur gestartet, welche eine Form einer Dialogbox festlegt und deren Art und Weise der Anzeige steuert. Zur Darstellung der Dialogbox innerhalb der Tabelle wird ebenfalls auf die zugrundeliegenden Umgebungsdaten der Tabelle zurückgegriffen. Das geschieht in der Weise, dass durch die aktivierte Prozedur zunächst eine zu erwartende Darstellungsgröße bzw. -form der Dialogbox ermittelt wird. Aus den Umgebungsdaten werden durch die Prozedur Informationen über die aktuell vorliegende Zellenstruktur der dargestellten Tabelle entnommen.

Es erfolgt eine Anpassung der erwarteten Darstellungsgröße und -form an die momentan gegebene Zellenstruktur, so dass die erzeugte Dialogbox eine eindeutig definierte Gesamtheit von Tabellenzellen (beispielsweise Zellen einer Tabellenspalte und/oder eine begrenzten Anzahl von Tabellenzeilen) überdeckt. Die Ränder der erzeugten Dialogbox verlaufen hierbei im wesentlichen entlang der durch die Umgebungsvariablen definierten Begrenzungen der Zellen in der Tabelle. Die Dialogbox wird somit als integraler Bestandteil des Tabellenhintergrundes angezeigt.

Wie bereits nach dem Stand der Technik üblich, kann die Dialogbox Ausgestaltungen aufweisen, die es ermöglichen, deren Darstellungsposition auf dem Display sowie auch deren Größe zu variieren. Größenvariation und Positionsverschiebung erfolgen im wesentlichen entlang der Zellenbegrenzungslinien der Tabelle, wobei auch hier auf die Umgebungsvariablen der Tabellendarstellung zurückgegriffen wird. Die Variation der Position der Dialogbox erfolgt in an sich bekannter Weise mittels eines peripheren Eingabegerätes, insbesondere einer Mouse, eines Touchpads, Trackballs, einer Tastatur und dergleichen weitere Eingabemittel.

Das erfindungsgemäße Verfahren ist keinesfalls ausschließlich auf eine Darstellung von Softkeys oder Dialogboxen beschränkt, sondern kann auf alle Ein- und Ausgabeapplikationen von Programmen angewendet werden, sofern diese durch eine graphische Anzeige auf einem Display dargestellt werden können und sofern deren graphische Darstellung mit den Umgebungsvariablen der tabellarischen Darstellung abgeglichen, in diese transformiert oder aus diesen extrahiert werden kann.

Weitere ausgestaltende Merkmale ergeben sich somit durch eine Kombination aller Unteransprüche der Erfindung.

Das Verfahren soll nachfolgend anhand von Anwendungsbeispielen näher erläutert werden. Zur Verdeutlichung dienen die beigefügten Figuren. Es zeigen:
- Fig. 1a: eine Darstellung einer durch Spalten und Zeilen definierten Tabellenstruktur mit einer beispielhaften Anordnung von Softkeys in einer Suchzeile,
- Fig. 1b: eine Darstellung eines durch Betätigung eines Softkeys aktivierten Pulldown-Menüs mit einer Listbox für Vorgabewerte als beispielhafte Dialogbox innerhalb von Zellenbegrenzungen,
- Fig. 2: eine Aufschlüsselung zum Verfahrensablauf benötigter Programmparameter und
- Fig. 3: einen schematischen Programmablaufplan, umfassend eine Tabellengenerierung, eine Softkeygenerierung und eine Erzeugung eines Dialogfeldes.

Es werden für gleiche oder gleich wirkende Verfahrensbestandteile die selben Bezugsziffern verwendet.

Im Folgenden werden erfindungsgemäße Anzeigemodi für einen Softkey und eine Dialogbox als Beispiele für erfindungsgemäße Darstellungen von Eingabe- und Ausgabeapplikationen dargestellt. Die Dialogbox ist in dem hier aufgeführten Anwendungsbeispiel als Pulldown-Menü ausgeführt.

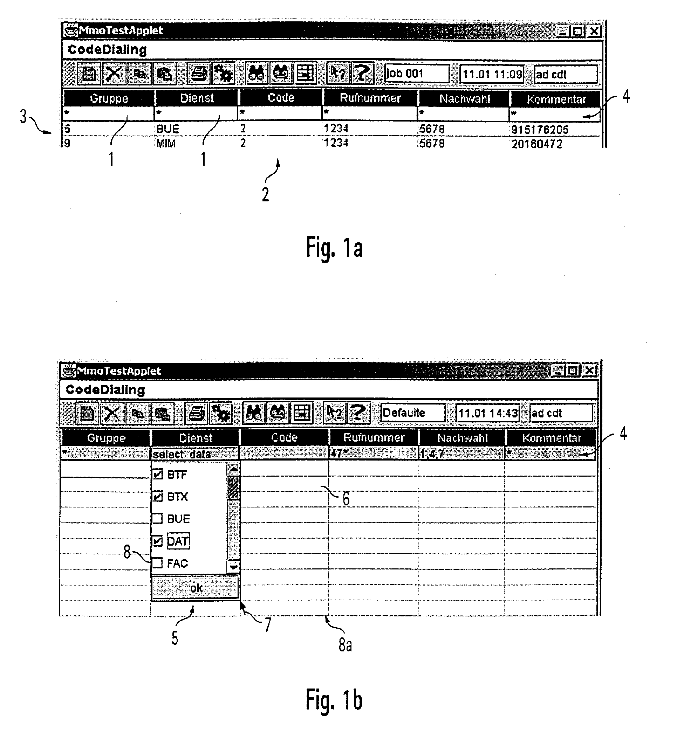

In den Figuren 1a und 1b sind äußere Erscheinungsbilder des erfindungsgemäßen Verfahrens dargestellt. Die Figuren zeigen eine Anordnung von Softkeys 1, die unter einem Tabellenkopf angeordnet sind. Die Softkeys entsprechen in ihren äußeren Begrenzungen den nach Spalten 2 und Zeilen 3 geordneten Tabellenzellen und sind in beiden Figuren beispielhaft als eine Suchzeile 4 zusammengefasst. Die Softkeys heben sich von der sonstigen Gestaltung der Tabellenzellen in der für graphische Benutzeroberflächen üblichen Weise ab. Die Softkeys können optional einoder ausgeblendet, sowie im wesentlichen frei über das gesamte Tabellenareal verteilt werden.

In Fig. 1b ist ein Pulldown-Menü 5 dargestellt, welches durch einen üblichen Anklick-Vorgang eines Softkeys erzeugt wurde. Das Pulldown-Menü ist in die Tabellenstruktur integriert, indem es eine definierte Gesamtheit von Einzelzellen 6 in einer definierten Spalte überdeckt. Mittels eines üblichen Mauszeigers 7 ist es möglich, die Menübegrenzung 8 des Pulldown-Menüs zu verschieben, um die dargestellte Größe des Menüs zu verändern. Die Menübegrenzung fällt hierbei stets mit den jeweiligen Zellenbegrenzungen 8a zusammen.

Im dargestellten Anwendungsbeispiel überdeckt das Pulldown-Menü genau neun Einzelzellen in einer spaltenartigen Anordnung. Eine Veränderung der Menügröße ist im gezeigten Beispiel vor allem in Spaltenrichtung möglich, indem der Menürand 8 mittels des Mauszeigers 7 an dessen unterem Abschnitt in an sich bekannter Weise nach unten gezogen werden kann. Erfindungsgemäß erfolgt die Größenänderung in diskreten Einheiten ganzer Einzelzellen 6. Dadurch ist gewährleistet, dass das Pulldown-Menü in seiner Darstellung auch bei einer Veränderung seiner Kontur in die Tabellenstruktur integriert ist.

Ein programmintern erzeugter Hinweis oder eine Warnmeldung, beispielsweise über ein fehlerhaftes Datenformat, der in einer für graphische Nutzeroberflächen bekannten Weise in einem Hinweisfeld angezeigt ist, wird ebenfalls unter einem Rückgriff auf die Umgebungsvariablen in die tabellarische Struktur eingefügt. Dieses hier nicht bildlich dargestellte Ausführungsbeispiel des erfindungsgemäßen Verfahrens geschieht in Analogie zum in Fig. 1b dargestellten Ausführungsbeispiel, indem die Hinweisbox eine genau definierte Anzahl von Tabellenzellen überdeckt.

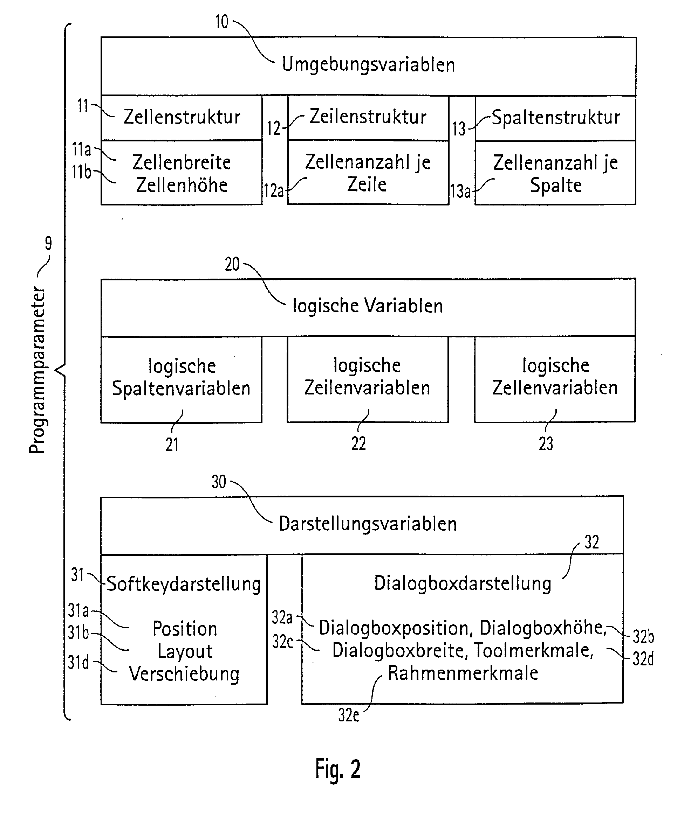

Im Folgenden wird die zugrundeliegende Programmstruktur näher erläutert. In Fig. 2 ist ein Überblick über eine für einen erfindungsgemäßen Programmablauf erforderliche Gesamtheit von Programmparametern gegeben.

Die vom Tabellenkalkulationsprogramm erzeugte tabellarische Darstellung ist innerhalb des für die Erzeugung graphischer Strukturen zuständigen Programmteils durch Umgebungsvariablen 10 festgelegt, die sich während der Programmausführung jederzeit ändern können. Die Umgebungsvariablen umfassen Zellenstrukturen 11, welche wiederum mindestens Informationen über aktuell vorliegende Zellenbreiten 11a und Zellenhöhen 11b beinhalten.

In Tabellenkalkulationen sind Zellen zu Spalten und Zeilen zusammengefasst. Die Umgebungsvariablen enthalten aus diesem Grund Angaben über eine Zeilenstruktur 12, welche mindestens Informationen über eine aktuelle Anzahl von Zellen je Zeile 12a beinhaltet, und Angaben über eine Spaltenstruktur 13, welche mindestens Informationen über eine Zellenanzahl je Spalte 13a umfasst.

Jede Veränderung der tabellarischen Darstellung während des Programmablaufs, beispielsweise Veränderungen von Zellenbreiten, Zellenanzahlen je Spalte und/oder Zeile, wirkt auf die Umgebungsvariablen ein und verändert diese.

Den Zellen der tabellarischen Darstellung sind Daten zugeordnet, die wiederum visuell in bekannter Weise nach Zeilen und Spalten gruppiert sind. Die Verknüpfung von graphischer Darstellung und abzuarbeitenden Kalkulationsdaten erfolgt durch logische Variablen 20, die mindestens logische Spaltenvariablen 21 und logische Zeilenvariablen 22 umfassen. diese wiederum bauen auf logische Zellenvariablen 23 auf, die eine elementare Zuordnung der graphischen Zellenstruktur zu den verarbeiteten Daten herstellen.

Für Gestaltungsmerkmale der Ein-/Ausgabeapplikationen weist das ausgeführte Programm Darstellungsvariablen 30 auf, die auf die Umgebungsvariablen 10, sowie auf die logischen Variablen 20 zugreifen. Die Struktur der Darstellungsvariablen hängt in entscheidender Weise vom Anwendungsbeispiel ab. Im hier dargestellten speziellen Anwendungsbeispiel sind diese im wesentlichen nach Variablen zu einer Softkeydarstellung 31, sowie zu einer Dialogboxdarstellung 32 gegliedert. Die Variablen zur Softkeydarstellung umfassen mindestens Informationen zu einer aktuell vorliegenden Position 31a des erzeugten Softkeys auf dem Display, zu einem Layout 31b und zu einer erzeugten Verschiebung 31d des Softkeys auf der Darstellung im Display.

Die Variablen zur Dialogboxerstellung umfassen mindestens Informationen über eine Dialogboxposition 32a, eine Dialogboxhöhe 32b, eine Dialogboxbreite 32c, sowie Angaben über Toolmerkmale 32d, beispielsweise Bildlaufleisten und dergleichen Steuerelemente, sowie Rahmenmerkmale 32e zur Darstellung eines Randes des Pulldown-Menüs oder der ansonsten zu erzeugenden Dialogbox.

Bei der Generierung der unter Fig. 1a und Fig. 1b beispielhaft gezeigten Softkeys 1, Suchzeilen 4 und des Pulldown-Menüs 5 werden den Darstellungsvariablen 30 dieser Elemente die Umgebungsvariablen 10 zugrunde gelegt.

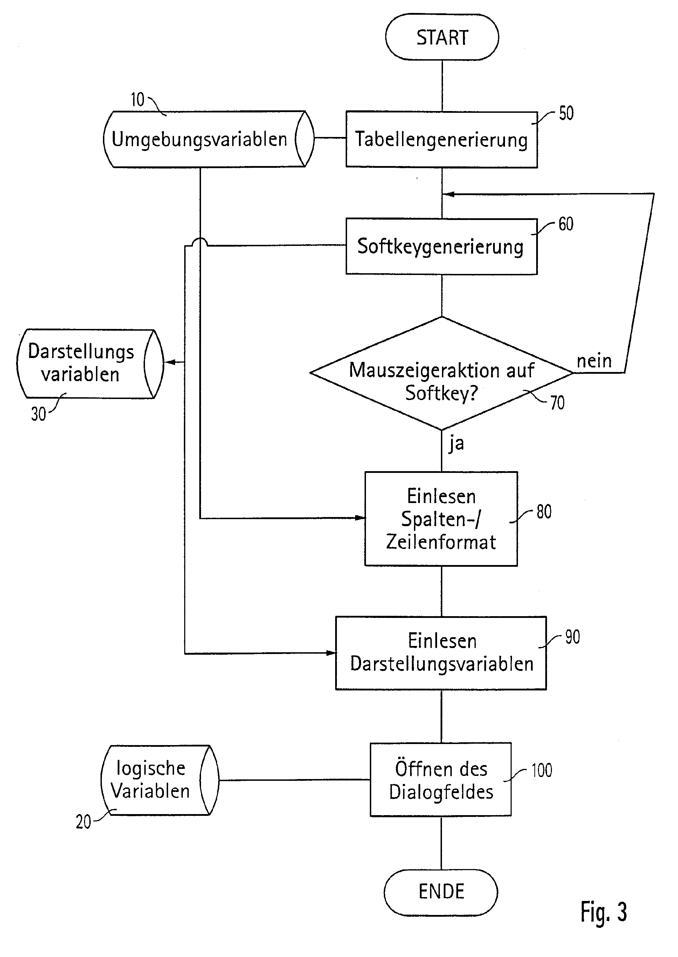

Der in Fig. 3 dargestellte Ablaufplan stellt beispielhaft die erfindungsgemäß auszuführenden Abläufe bei einer Generierung eines Pulldown-Menüs 5 aus Fig. 1b dar. Dieser Ablaufplan kann je nach Art der zu erzeugenden Ein-/Ausgabeapplikation modifiziert sein, ändert sich aber in seiner Grundstruktur nur unwesentlich. Im hier dargestellten Anwendungsbeispiel wird das beispielhafte Pulldown-Menü extern mittels eines Eingabegerätes aktiviert. Erfindungsgemäß sind allerdings auch Aktivierungsvorgänge von Dialogboxen durch intern ablaufende Programmprozeduren möglich.

Zunächst erfolgt durch das Tabellenkalkulationsprogramm eine Tabellengenerierung 50 aufgrund bereits vordefinierter oder aktuell vorliegender Umgebungsvariablen. Unter Einbeziehung der Darstellungsvariablen 30 werden die Softkeys innerhalb der tabellarischen Darstellung unter Vermittlung der Umgebungsvariablen mittels einer Softkeygenerierung 60 erstellt, indem durch die Generierungsprozedur der aktuelle Zustand von Zellenstruktur, Zeilenstruktur und Spaltenstruktur abgefragt wird. Durch Abfrage der Darstellungsvariablen, insbesondere der Position 31a und des vorgesehenen Layouts 31b, wird ein Softkey auf dem Display generiert, indem dessen Areal eine Tabellenzelle in Höhe und Breite vollständig ausfüllt.

Bei einer sich anschließenden Abfrage 70 auf eine Position eines Mauszeigers auf dem Softkeyareal und einer Betätigung einer Maustaste oder einer vergleichbaren Schaltvorrichtung an einem externen Eingabegerät zur Cursorsteuerung erfolgt programmseitig eine Entscheidung darüber, welche Art einer Ein-/Ausgabeapplikation erzeugt wird. Im hier dargestellten Anwendungsbeispiel wird ein Pulldown-Menü nach der in Fig. 1b aufgezeigten Weise erzeugt.

Erfolgt ein Eingabevorgang an einem externen Eingabegerät, beispielsweise in der Form eines "Mausklicks", während der Cursor auf dem Softkeyareal lokalisiert ist, wird ein weiterer Zugriff auf Umgebungs- und Darstellungsvariablen ausgelöst, indem ein Einlesen 80 der aktuelle Spalten- und/oder Zeilenstruktur ausgeführt wird. Durch die Generierungsprozedur des Pulldown-Menüs wird die Größe des anzuzeigenden Menüs vorab aus den Darstellungsdaten errechnet und diese anschließend der ermittelten Zeilen- und Spaltenstruktur angeglichen.

Bei dem in Fig. 1 dargestellten Pulldown-Menü 5 wird der Angleichvorgang beispielsweise in der Weise ausgeführt, dass als Bestandteil der Generierungsprozedur des Menüs eine Anweisung vorgesehen ist, nur ein relativ kleines Menü mit einer Reihe von Checkboxen anzuzeigen. Der Platzbedarf dieses Menüs erlaubt es in diesem Fall, die Menügröße auf genau eine Spaltenbreite und vorerst neun Zeilenhöhen der angezeigten Tabelle zu reduzieren, die von der Menübegrenzung umschlossen wird. Dies ist für das in Fig. 1 dargestellte Ausführungsbeispiel besonders vorteilhaft, da das aktivierte Pulldown-Menü in diesem Fall Datenoperationen in einer genau definierten Spalte der gegebenen Tabelle mittels der beispielhaft aufgezeigten Checkboxen ermöglichen soll.

Die erzeugte Dialogbox ist nicht auf die Struktur eines Pulldown-Menüs beschränkt, sondern kann Felder zur freien Texteingabe, Suchmasken mit Wildcardfunktion oder Listboxen mit Vorgabewerten beinhalten.

Durch ein Einlesen der Darstellungsvariablen 90 werden Gestaltungsmerkmale wie Bildlaufleisten, Rahmengestaltung und dergleichen Informationen des Pulldown-Menüs abgefragt. Im hier genannten Beispiel wird eine Bildlaufleiste am rechten Rand des zu öffnenden Menüs generiert. Die Einlesevorgänge 80 und 90 werden durch den eigentlichen Öffnungsvorgang des Pulldown-Menüs abgeschlossen.

Eine Größenänderung des erzeugten Pulldown-Menüs durch eine Bewegung des Mauszeigers erfolgt im in Fig. 1 dargestellten Beispiel dadurch, dass das Menü vorzugsweise in vertikaler Richtung gestreckt werden kann. Bei Ausführung dieser Operation wird wiederum auf die Umgebungsdaten zurückgegriffen, so dass eine vertikale Streckung des Menüs nur in ganzzahligen Einheiten von Zellenhöhen erfolgt.

### Bezugszeichenliste

- 1: Softkey
- 2: Spalte
- 3: Zeile
- 4: Suchzeile
- 5: Pulldown-Menü
- 6: Zelle
- 7: Mauszeiger
- 8: Menübegrenzung
- 8a: Zellenbegrenzung
- 9: Programmparameter
- 10: Umgebungsvariablen
- 11: Zellenstruktur
- 11a: Zellenbreite
- 11b: Zellenhöhe
- 12: Zeilenstruktur
- 12a: Zellenanzahl in Zeile
- 13: Spaltenstruktur
- 13a: Zellenanzahl in Spalte
- 20: logische Variablen
- 21: logische Spaltenvariablen
- 22: logische Zeilenvariablen
- 23: logische Zellenvariablen
- 30: Darstellungsvariablen
- 31: Softkeydarstellung
- 31a: Position auf Displaydarstellung
- 31b: Layout
- 31d: Verschiebung
- 32: Dialogboxdarstellung
- 32a: Dialogboxposition
- 32b: Dialogboxhöhe
- 32c: Dialogboxbreite
- 32d: Toolmermale
- 32e: Rahmenmerkmale
- 50: Tabellengenerierung
- 60: Softkeygenerierung
- 70: Abfrage auf Mauszeigerposition/Aktion am externen Eingabegerät
- 80: Einlesen des Spalten- und Zeilenformates
- 90: Einlesen der Darstellungsvariablen
- 100: Öffnen des Dialogfeldes

## Patentansprüche

1. Anzeigeverfahren zur Unterstützung der Eingabe und Ausgabe von Daten in Tabellenkalkulationsprogrammen, umfassend eine durch Umgebungsvariablen (10) in Look & Feel definierte tabellarische Darstellung, mindestens einen durch einen Datenzeiger (7) aktivierbaren Softkey (1) und eine durch Aktivierung des Softkey auf einem Display erzeugte Einund Ausgabeapplikation, insbesondere eine Dialogbox, für Eingabe und Ausgabe von Programmresultaten oder Textfelder zu einer freien Texteingabe
wobei
eine Darstellung der Ein- und Ausgabeapplikation gemäß den Umgebungsvariablen (10) in die tabellarische Darstellung eingefügt wird.

2. Anzeigeverfahren nach Anspruch 1,
**dadurch gekennzeichnet, dass**
die Darstellung des oder der Softkeys (1) innerhalb einer durch die Umgebungsvariablen (10) definierten Zellenstruktur der Tabellendarstellung erfolgt und einer aktuellen Änderung der Zellenstruktur durch Veränderung der Umgebungsvariablen (10) durch eine fortlaufende Formatierung angepasst wird.

3. Anzeigeverfahren nach Anspruch 1 oder 2,
**dadurch gekennzeichnet, dass**
eine Gesamtheit von Softkeys (1) innerhalb der Zellen der Tabellendarstellung so angeordnet ist, dass diese eine als Suchzeile (4) bezeichnete Tabellenzeile oder eine als Suchspalte bezeichnete Tabellenspalte ausfüllen, die insbesondere optional ein- bzw. ausblendbar gestaltet ist.

4. Anzeigeverfahren nach Anspruch 1,
**dadurch gekennzeichnet, dass**
bei einem Öffnungsvorgang einer Dialogbox ein Einlesen der Umgebungsvariablen (10) zu deren Darstellung in einer Weise erfolgt, dass die Dialogbox eine eindeutig definierte Anzahl von Zellen (6) der Tabelle, insbesondere in Richtung einer Spalte (2) und/oder einer Zeile (3), ausfüllt.

5. Anzeigeverfahren nach einem der vorhergehenden Ansprüche,
**dadurch gekennzeichnet, dass**
eine Größe der Dialogbox mittels einer Verschiebung der Menübegrenzung (8) variierbar ist, wobei die Variation im wesentlichen entlang der durch die Umgebungsvariablen (10) definierten Zellenbegrenzungen (8a) durch Betätigung eines peripheren Eingabegerätes zur Cursorsteuerung, insbesondere einer Mouse, eines Touchpads oder eines Trackballs, erfolgt.
